# EUROPEAN PATENT SPECIFICATION

(11) **EP 3 255 210 B1**
(45) Date of publication and mention of the grant of the patent: **24.11.2021**
(21) Application number: 17174820.5
(22) Date of filing: 07.06.2017
(51) Int. Cl.: E02B 17/00, E02B 17/02, F16B 7/04, F16L 37/02, F03D 13/25, F16B 7/02

(54) **METHOD FOR INSTALLING AN OFFSHORE STRUCTURE**
VERFAHREN ZUR INSTALLATION EINER OFFSHORE-STRUKTUR
PROCÉDÉ D'INSTALLATION D'UNE STRUCTURE EN MER

(30) Priority: 07.06.2016 NL 1041914
(43) Date of publication of application: 13.12.2017
(73) Proprietor: KCI the engineers B.V., 3125 AE Schiedam (NL)
(72) Inventor: van Gelder, Klaas Boudewijn, 3125 AE Schiedam (NL)
(74) Representative: V.O.

(56) References cited:
- EP-A2- 2 910 686
- WO-A1-2006/081679
- KR-A- 20130 012 106
- NL-C- 2 003 648
- US-A- 5 090 837

## Description

The invention relates to a method for installing a fixed offshore structure.

Offshore structures are well known and are for example used for the exploration of oil and gas offshore, or as for the generation of renewable energy such as wind energy or solar energy. When the water depth is low to medium, say between about 20 m and about 80 m, typically a fixed offshore structure is used. The fixed offshore structure is fixedly anchored to the sea bottom.

In particular for fixed offshore structures, having a fixed anchoring or a fixed seabed fixation, first the seabed fixation structure may be installed. The seabed fixation structure may extend over approximately the water depth, such as a monopile that is mountable to the sea bottom, or may comprise a seabed fixation part for mounting to the sea bottom and a substructure part that is mountable onto the seabed fixation part. The seabed fixation part may comprise one or more piles, or one or more suction cans, or a gravity base, or any other seabed fixation. The substructure can for example be a jacket substructure or a monopile substructure. The seabed fixation structure usually serve as a basis for supporting a superstructure. The superstructure preferably is above the sea level and can be any type of well known superstructure, such as a platform, e.g. for oil or gas production, accommodation, drilling, etc, or such as a wind turbine or a transformer station or a solar energy station. To provide for the transition between the seabed fixation structure, which is largely below the sea level, and the superstructure, which is above the sea level, a transition piece is provided. The conventional transition piece extends typically about approximately 5m to approximately 25m above the water level.

After installation of the seabed fixation part, the other part of the seabed fixation structure, i.e. the substructure part, such as a jacket or a transition piece, is mounted onto the seabed fixation part. This connection is below the sea level and thus has to be established under water or near the water line. This makes it a difficult end cumbersome operation that in practice is prone to failures. For such underwater connection typically grout is used to form a firm connection between the seabed fixation part and the substructure part. Other known connection types, such as bolted flanges, are not used under water because of its sensitivity for corrosion and difficulty of access. However, it is well known that grouted connections are difficult to realize, difficult to inspect and often proof unreliable.

The disadvantages of state of the art grouted connections are, amongst others, that the making the connection may be time consuming and the connections also showed to be insufficiently reliable. The installation of bolted flange connections are also time consuming, fabrication costs are high and regular inspections are required to verify the pretension in the bolts, which is also expensive. Also, the design of very large bolted flange connections becomes more difficult, as the loads increase. If the bolts are increased in size, the manual handling of the bolts becomes difficult. Moreover, bolted connections are not used under water due to corrosion problems.

Also when the seabed fixation structure is a monopile, the connection with the transition piece is often established under and/or near the waterline level using a grouted connection, with the above mentioned problems.

In the recent years a trend can be seen that wind turbines are increasing in size in order to reduce the costs of wind energy. The size of offshore turbines installed around the year 2010 was in the range of 3-6 MW, which recently increased to 6-8 MW. For the coming years the industry is developing turbines in the range of 10-12 MW. The sizes and weights of the pieces to be installed are therefore also increasing. The lifting capacity of cranes onboard most existing crane vessels is no longer sufficient, and larger crane vessels are to be used, which are more expensive. This reduces the economic benefits of larger turbines. The largest pieces can be split in more parts to keep the maximum lifting weight within the available crane capacity. This means more lifts are to be done and more connections are to be made, which is also more expensive. Larger turbines can be more economical if these connections are cheap and can be made fast.

In addition, in particular when the superstructure is a wind turbine, offshore installation companies face the problem of ever increasing weight and size of wind turbines, thereby also imposing increasing demands on the seabed fixation structures. In view of the difficulty of installation, accessibility and/or maintenance, in offshore structures, connections under water are preferably avoided. However, in view of these increasing demands, a monopile seabed fixation structure may be unsuitable as a seabed fixation structure for direct mounting to the sea bottom, such that a seabed fixation part, that is first installed to the sea bottom, and a substructure part, that is installed on the seabed fixation part, may be needed, or if made suitable, may become too large to be installed by present installation equipment. Both developments may lead to more under water connections using grout that is known as relatively difficult, cumbersome and/or unreliable.

Publication NL2003648 discloses a foundation for an off-shore windmill comprising a basis element and a transition piece. At the bottom end of the transition piece, there is a conical or cylindrical ring which is to be put over an upper portion of a conical part of the basis pile of the foundation "in a conventional manner".

Publication KR102130012106 discloses a grout connection between the lower and the upper part to which at least primary shear keys, and preferably also secondary shear keys are added. The shear keys are welded to the lower and the upper parts.

Publication EP2910686 discloses a first element, such as a pile, having an upper end, and a second element, such as a superstructure, having a lower end. Each of the upper end and the lower end comprise two conical rings arranged to contact each other to form an in-line connection above sea level.

It is an object of the invention to provide for an installation method that obviates at least one of the above mentioned problems. In particular, a reliable underwater installation method is aimed for.

Thereto, the invention provides for a method for installing an offshore structure at an offshore site having a sea bottom and a water depth defining a sea level; the offshore structure including a seabed fixation structure, a transition piece and a superstructure; the method comprising installing the seabed fixation structure to the sea bottom, such that the seabed fixation structure at least partly extends above the sea bottom; positioning the transition piece on the seabed fixation structure, wherein at least an upper side of the transition piece is above the sea level; positioning the superstructure on the transition piece such that the superstructure is extending above the sea level; wherein at least one of the connection between the transition piece and the seabed fixation structure and of the connection between the transition piece and the superstructure are provided as an in-line connection comprising at least two sets of conical rings engaging each other; wherein the at least one in-line connections is at least partly below the sea level.

The seabed fixation structure is directly installed to the sea bottom and can be a monopile structure or a jacket structure having a foundation. Alternatively, the seabed fixation structure can comprise a seabed fixation part, for installation to the sea bottom, e.g. a foundation only, and a substructure part, for mounting to the seabed fixation part, e.g. a monopile or jacket for mounting on the foundation. The seabed fixation part can be a pile, or a suction can or a gravity base, or a frame comprising multiple piles or multiple suction cans or multiple gravity bases. The substructure part is then positioned over the seabed fixation part and is often a jacket structure. Then, a transition piece is positioned on the seabed fixation structure, and on the transition piece, a superstructure is installed. The superstructure can be a platform, or more typically, can be a wind turbine tower. These structures to be installed at the offshore site, are preferably pre-manufactured onshore, such as a wharf, and then transported to the respective offshore installation site where they are installed using installation vessels.

By providing the in-line connection with at least two sets of conical rings under water, an easy to install connection can be made, that is sufficiently resistant against corrosion and low in maintenance. Contrary to what one would expect, it turned out that the normal or usual anti-corrosion measures, such as coating or painting and/or cathodic protection, are sufficient to retard the connection from corroding in a similar way as the offshore structure. While the outside of the connection is protected against corrosion by conventional means, the contact surfaces of the conical rings are in full contact and as such completely sealed off from seawater and oxygen and therefore also protected against corrosion. Due to this, it becomes possible to provide the under water connections by means of an in-line connection with at least one set of conical rings. By providing an in-line connection, the longitudinal axes of the parts to be connected by means of the in-line connection become in-line with each other or approximately in-line with each other.

Preferably, an in-line connection with two sets of engaging conical rings is provided as the at least one underwater connection.

According to the invention, two sets of conical rings that are at a distance from each other are provided. However, not in accordance with the claimed invention, an in-line connection having a single set of conical rings can be provided. Such an in-line connection can also be referred to as a slip joint connection or as a single slip joint connection. The conical rings are then dimensioned having a height larger than its diameter to take up sufficient bending moment. Whereas, for an in-line connection having multiple sets of engaging conical rings, the conical rings typically have a height that is much smaller than their diameter. Bending moment can then be taken by the sets of conical rings that are positioned at a distance from each other.

Advantageously, the engagement surfaces of the conical rings that are configured to engage with each other are preferably manufactured, e.g. machined sufficiently smoothly that the surfaces are in full contact, such that corrosion problems known from e.g. bolted flange connections do not occur. The surface smoothness, or roughness, of the engagement surfaces is preferably between about 5 micrometer to about 10 micrometer, more preferably about 6 to 7 micrometer. The engagement surfaces are sufficiently smooth such that cracks, slip or wear can be obviated between the engagement surfaces and a reliable and stable engagement can be obtained.

By providing at least the under water connection as an in-line connection comprising at least two sets of conical rings engaging each other, the connection can be easily obtained without the use of any special tools or equipment, no grouting, no bolting etc. is required. The connection between a lower part and an upper part comprises one set of conical rings or more sets of conical rings at a distance from each other. The one or more conical rings are provided on an upper end of the lower part and the same number of conical rings at the same or similar distance from each other on a lower end of the upper part, such that upon positioning of the upper part on the lower part, the corresponding conical rings engage with each other to provide a firm connection. Preferably multiple sets of conical rings are provided as this provides additional advantages in terms of fast, easy and reliable installation, as well as more resistant to corrosion and less sensitive to wear. No additional equipment needs to be used. It suffices to position the upper part of the structure on the lower part and due to the conicity of the rings the connection and the weight of the upper part is being formed. The advantage of such a connection is that it is formed immediately without any additional equipment involved resulting in a relatively fast, stable, fail-safe and/or reliable way of connection a lower part and an upper part. After the connection is formed, the upper part is directly stable with respect to the lower part, contrary to known connection that often require waiting time and/or pre- or post-loading time.

Preferably, the subsequent parts of the offshore structure are positioned over each other, such that an upper end of a lower part fits inside of a lower end of an upper part, or, a lower end of the an upper part is placed over an upper end of a lower part. The conical rings of the lower part are thus provided on an outside of the upper end of the lower part, and the corresponding conical rings of the lower end of the upper part are provided on an inside of the lower end. The conical rings have engagement surfaces that are inclined with respect to a longitudinal direction of the part to which they are connected. The engagement surfaces are preferably inclined such that a lower side of the conical ring is at a larger radial distance from a longitudinal axis of the lower part than an upper side of the conical ring. The at least two conical rings on the lower part are inclined in a similar way. The at least two corresponding conical rings on the upper part, to be engaged with the lower part, are inclined in the same way. The connection is an in-line connection, such that a longitudinal axis of a lower part and a longitudinal axis of an upper part are in-line or approximately in-line after the connection is formed.

Advantageously, the structure below the sea level may be divided in multiple sections that are connected under water using the in-line connection having at least one, preferably multiple sets of engaging corresponding conical rings. So, the seabed fixation structure itself may be divided in multiple sections or modules to allow for a modular installation. Or, when the seabed fixation structure comprises a seabed fixation part for direct installation to the sea bottom, such as a foundation, and a substructure part, such as monopile or a jacket to be mounted on the seabed fixation part, the seabed fixation part itself may also be divided in multiple sections or modules to allow for a modular installation. As such, the ever increasing requirements of heavier and/or larger foundations to accommodate heavier and/or larger superstructures, such as wind turbines, can be more easily complied with, as the used in-line connection provides for a relatively fast, reliable and almost corrosion free connection. The sections can be configured such that they can be transported and/or installed with readily available equipment, and thus, no rather expensive and/or exclusive installation vessel for large to very large constructions are needed. This may make the installation more cost effective as well. As such, a modular offshore structure is made available, of which all sections or modules are preferably sized to fit on an installation vessel and to be installed on-site.

During the lifetime of the offshore structure and of the connections, normal inspection and maintenance intervals can be set, so there are no additional inspection and/or maintenance requirements due for this underwater in-line connection. More advantageously, also the superstructure, e.g. a wind turbine may be divided in sections that can be installed subsequently using the in-line connection with multiple sets of conical rings, thus making use of the advantage of a relatively fast and reliable connection, as well as that the individual sections can be transported and installed with readily available equipment, such that expensive and/or heavy equipment with e.g. very large cranes can be obviated.

More advantageously, using the in-line connection under water to connect an upper part onto a lower part, opens the possibility to provide for a larger transition piece than a conventional transition piece of which the lower side of the transition piece, and thus the connection of the transition piece with the lower seabed fixation structure is below the sea level. Not only a larger transition piece can thus be provided, but also, the transition piece can already be pre-manufactured with secondary steel mounted thereon, such as a boat landing, or a stair, or a ladder or a working platform etc. Contrary to conventional offshore structures of which the transition piece needs to extend preferably at least some 5 m above the sea level to avoid sea water ingress to the connection, the in-line connection can now be made under water. As such, the secondary steel can already pre-manufactured onto the transition piece, allowing a significant reduction in installation time. As in conventional prior art offshore structure, this secondary steel is piece by piece mounted to that part of the seabed fixation structure extending above the water line, but only after the seabed fixation structure has been fixed to the seabed. As this is often done, amongst other ways, by hammering, the secondary steel cannot be pre-manufactured to the structure in view of damages during installation. Therefor, this secondary steel is mounted to the seabed fixation structure only after installation. Also, cathodic protection, e.g. anodes, can be already pre-manufactured onto the seabed fixation structures at optimal locations, instead of these anodes to be added post-installation is often done with conventional offshore installations.

As by using the in-line connection having at least two sets of conical rings no waiting time is required for the connection to be set or otherwise formed after engagement, the subsequent sections or structures can be positioned onto each other consecutively. If the sections and/or parts of the offshore structure are available they could be installed one after another, and as such the total installation time of such an offshore structure can be significantly reduced. This can be an advantage for wind turbine parks for which a large number of wind turbine foundations and towers need to be installed. Alternatively, it may be that a first installation vessel comprising the seabed fixation structures installs the respective seabed fixation structures at the subsequent installation sites. A second installation vessel with the transition pieces can then follow directly behind the first one, positioning the respective transition pieces on the available seabed fixation structures by means of the in-line connection with the multiple sets of conical rings. A third installation vessel with the superstructures, e.g. wind turbine tower, or wind turbine tower sections, may then follow directly behind to position the superstructure onto the transition piece by means of the similar in-line connection of multiple sets of conical rings.

Further advantageous embodiments are represented in the subclaims.

The non-claimed use of such an in-line connection having one or more sets of engaging conical rings for forming an underwater connection, in particular for forming a corrosion-proof underwater connection is disclosed.

The invention further relates to an offshore structure installed using the above method and having such an in-line connection under water.

Other aspects of the disclosure are an in-line connection of multiple sets of engaging conical rings, wherein a set of engaging conical rings is manufactured from a single piece of conically rolled element, preferably a conically rolled plate element. This allows for reliable manufacturing of the conical rings and may ensure that the conical rings engage as good as possible.

Further, an in-line connection may comprise one (not claimed) or more, for example two, sets of engaging conical rings, wherein the one or more sets of engaging conical rings, so four conical rings for two sets, are all manufactured from a single piece of conically rolled element, preferably a conically rolled plate element. This further allows for a reliable and smooth engagement of the engaging corresponding conical rings, and since all four conical rings are from the same conically rolled plate, provides for a relatively reliable and stable connection.

Another aspect may be that the in-line connection is at a distance under water that is larger than half of the water depth. Additionally, the directly above structure or module or section is pre-manufactured with a suitable cathodic protection system. As such, the installation time may further be reduced, and/or installation may further become simpler and/or more reliable.

Further, the in-line connection with the multiple sets of engaging conical rings, a lower side of the in-line connection may be at a depth of about 1m to about 8m below sea level. Additionally, the directly above structure or module or section is pre-manufactured with a boat landing and/or climbing elements and/or a cathodic protection system. By using the in-line connection under water, these so-called secondary steel structures can already be pre-manufactured thus saving installation time and costs.

By providing a manufacturing method of the rings which is relatively fast, accurate and relatively cheap, a reliable engagement between the corresponding conical rings can be obtained. This can be e.g. achieved by a rolling method whereby a single cone is rolled from a flat plate, which is wide enough and long enough to form one or more pairs of two conical rings by cutting the rings out of the cone. After rolling the cone a seam weld is made to complete the cone and the rings can be cut for further manufacturing of the multiple sets of engaging conical rings that can provide the in-line connection. Also, by rolling a sufficient smooth surface roughness can be obtained that provides for the reliable engagement of the corresponding surfaces.

A mechanical property of the rolling process is that the cone angle is very constant in the longitudinal direction of the cone. Therefore the cone angle of the individual rings made from a single cone is automatically within tight tolerances. Since the cone angle is relatively small, between about 1 deg to about 10 deg, the circumference length of the rings has a low sensitivity for the position tolerance of the cut, and therefore the circumference length can be controlled very accurately. An accurate cone angle and an accurate circumference length ensure a reliable fit of the ring pairs.

A second advantage of this manufacturing method is that the rolled plate is wide enough to be mechanically stable during rolling, such that a standard rolling process, i.e. without a special support system, can be used and the rolling process can be faster. A third advantage is that more rings are rolled simultaneously, This also speeds up the manufacturing process, further reducing costs of manufacturing.

This manufacturing method is especially interesting to provide an economic solution for the installation of large seabed fixation structures and/or superstructures in two, three or more pieces or sections, such as an offshore foundation and wind turbine tower, a power substation or a process unit for the production of oil or gas. The costs of the said in-line connection are reduced by the cheap manufacturing method of the rings. The installation of the pieces or sections of the offshore structure using the said in-line connections is fast, since the connection is self-settling after the sections are lifted in place.

The disclosure will further be elucidated on the basis of exemplary embodiments given by way of non-limitative description and illustration. Embodiments according to the disclosure will, by way of non-limiting example be described in detail with reference to the accompanying drawings. In the drawings
Figure 1 shows a side view of an offshore wind turbine according to prior art;
Figure 2 shows a principle sketch of a side cross section of a in-line connection with multiple sets of engaging conical rings according to prior art;
Figure 3 shows a cross section of the wall of a in-line connection with multiple sets of engaging conical rings with realistic proportions of the geometry according to prior art;
Figure 4 shows a schematic cross-section of the geometry of the in-line connection with multiple sets of engaging conical rings according to an aspect of the invention;
Figures 5a, 5b, 5c show different schematic views of an embodiment of a cone produced to form two rings of an in-line connection with multiple sets of engaging conical rings according to the invention, whereby figure 5a is an isometric view of the cone, figures 5b and 5b show cross-sections of the cone wall at one side of the cone;
Figures 6a, 6b, 6c show different schematic views of an embodiment of a cone produced to form two rings of an in-line connection with multiple sets of engaging conical rings according to the invention in an alternative arrangement, whereby figure 6a is an isometric view of the cone, figures 6b and 6b show cross sections of the cone wall at one side;
Figures 7a, 7b, 7c show different schematic views of a further embodiment of a cone produced to form two rings of an in-line connection with multiple sets of engaging conical rings according to the invention in another alternative arrangement, whereby figure 7a is an isometric view of the cone, figures 7b and 7b show cross sections of the cone wall at one side of the cone.
Figure 8 shows a schematic side view of an offshore wind turbine and monopile seabed fixation structure, assembled by using in-line connections with multiple sets of engaging conical rings according to the invention at several locations of the offshore structure of an offshore wind turbine;
Figure 9 shows a schematic side view of another embodiment of an offshore wind turbine and monopile seabed fixation structure, assembled by using in-line connections with multiple sets of engaging conical rings according to the invention at several locations of the offshore structure of an offshore wind turbine;
Figure 10 shows a schematic side view of an offshore wind turbine and jacket seabed fixation structure, assembled by using in-line connections with multiple sets of engaging conical rings according to the invention at several locations of the offshore structure of an offshore wind turbine;
Figure 11 shows a schematic side view of another embodiment of an offshore wind turbine and jacket seabed fixation structure, assembled by using in-line connections with multiple sets of engaging conical rings according to the invention at several locations of the offshore structure of an offshore wind turbine; and
Figure 12 shows a schematic side view of an offshore wind turbine and gravity base seabed fixation structure assembled by using in-line connections with multiple sets of engaging conical rings according to the invention at several locations of the offshore structure of an offshore wind turbine.

It is noted that the figures are only schematic representations of embodiments of the disclosure that are given by way of non-limiting example. Various modifications, variations, and alternatives are possible, as well as various combinations of the features described. The specifications, drawings and examples are, accordingly, to be regarded in an illustrative sense rather than in a restrictive sense. Corresponding parts are denoted by the same or corresponding reference numbers.

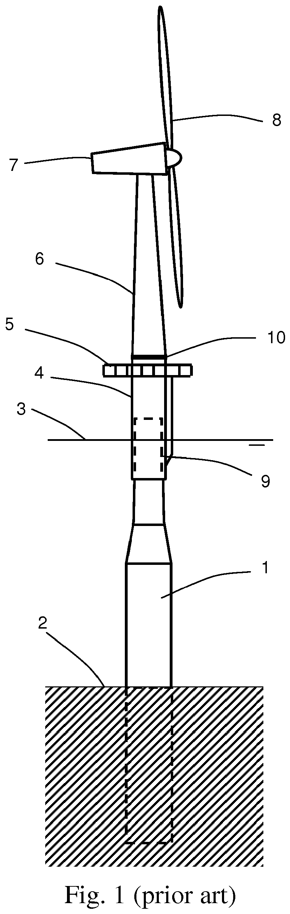

The foundation pile (1) of a wind turbine shown in figure 1 according to prior art is driven into the seabed 2. A Transition Piece (4) is connected to the foundation pile by filling an overlap length (9) by grout to form a permanent grouted connection. The TP (4) extends above the sea level (3), where provisions can be mounted, such as a working platform (5) and boat landing. The tower (6) is connected to the TP (4) by a bolted flange connection (10). The nacelle (7) contains the power generator unit (not shown), which is driven by the rotor (8).

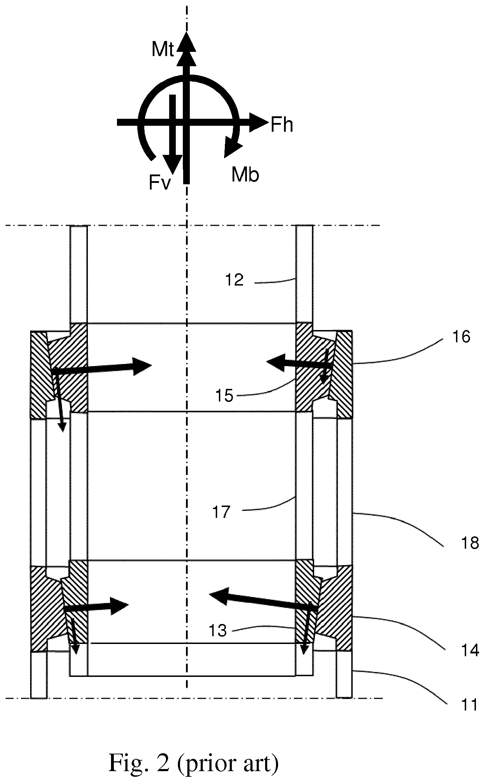

The sketch in figure 2 demonstrates the working principle of a in-line connection with multiple sets of engaging conical rings according to prior art. For clarity the cone angle and thickness of the rings (13, 14, 15, 16) are exaggerated in this sketch. Reaction forces between the rings (13, 14, 15, 16) due to connection loads Mt, Mb, Fh and Fv are indicated by arrows. The sketch is a copy of the original patent, only the numbering has been adjusted.

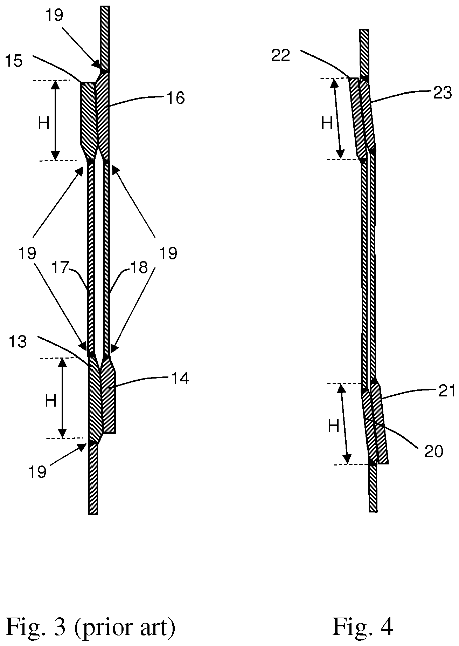

Figure 3 shows realistic dimensions of the main parts of a in-line connection with multiple sets of engaging conical rings according to prior art, whereby the rings are produced from cast steel, machined to form conical contact surfaces. The two rings (15,16) at the top of the in-line connection with multiple sets of engaging conical rings and two rings (13,14) provide the conical contact surfaces. Outside rings (14,16) are connected by welds (19) to the cylindrical tube (18) and the inside rings (13,15) are connected by welds (19) to the cylindrical tube (17). Welded connections (19) of the cylindrical tube at the top of the ring (16) and at the bottom of the ring (13) are also shown.

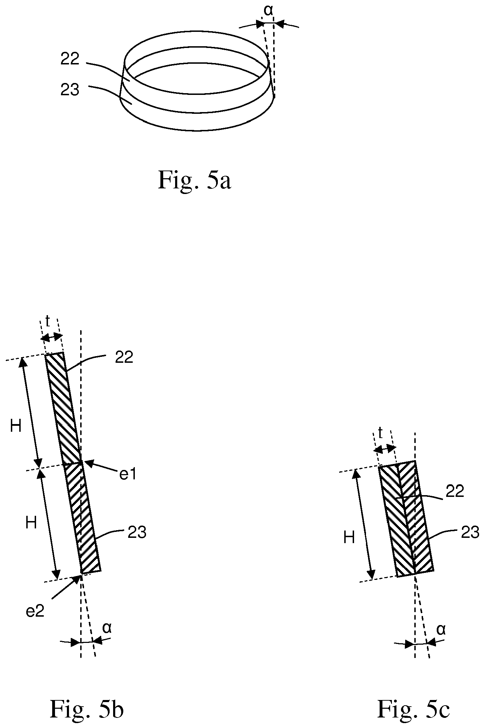

The rings (20, 21, 22, 23) of the in-line connection with multiple sets of engaging conical rings in Figure 4 are produced by conical rolling flat steel plate. The matching sizes of the rings circumference and conical angle are further explained in figures 5, 6 and 7.

A cone with a cone angle α is shown in figure 5a. One pair of matching rings (22, 23) can be produced by cutting the cone in two pieces. The cone angle α of both rings is then the same. In order to make the two rings match inside each other, to form an engaging connection, the height (H) and thickness (t) of the cut rings are preferably related to the angle α by the formula α = arctangent(t/H), where arctangent is a trigonometric function, as illustrated in figure 5b. Following this formula the outside bottom edge (e1) of ring (22) is matching with the bottom inside edge (e2) of ring (23), such that the rings fit and can form an engaging connection as shown in figure 5c.

The transfer of shear forces by friction in the contact area has a higher concentration at the edges of the contact surface if the ratio H/t increases. A shear stress concentration is not preferred, since this can cause very small slip movements resulting in wear of the contact surface. For ratio H/t smaller than about 6 the transfer of the shear force is approximately uniform. Therefore in a preferred embodiment of the invention, the ratio H/t is smaller than 6. As a consequence, for the arrangement shown in figure 5b the angle α is larger than about arctangent(1/6) which is between about 5 degrees to about 10 degrees, usually about 9 degrees.

In most applications, a cone angle α smaller than 9 degrees is preferred to achieve the self-settling behavior of the in-line connection with multiple sets of engaging conical rings under operational loads. A larger contact pressure in between the engaging rings may occur if the angle α is reduced, which also may increase the maximum friction shear stress in between the rings and may improve the settling behavior. A smaller angle α can be achieved as described in the following.

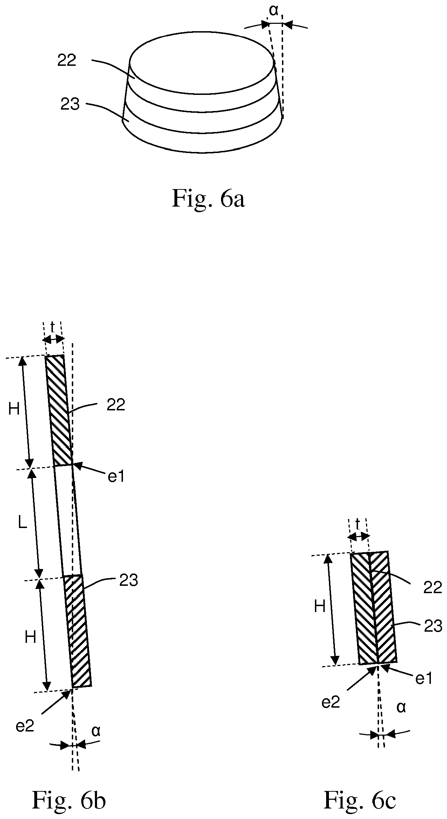

Figure 6a shows an isometric view, in which the rings (22,23) are at some distance (L) from each other, as shown in figure 6b. The angle α is in this embodiment determined by the relation α = arctangent(t/(H+L)). The angle α can be chosen as small as required by increasing the length (L). However, the material of the cone length (L) cannot be of use for the in-line connection, and is thus in fact redundant material. The length (L) is therefore preferably minimized in order to reduce material losses. Also, a smaller angle α and the related increase of contact pressure may result in an increase of tangential stresses in the engaging conical rings. The smallest allowable angle α is therefore also limited by the steel strength. Another limitation for the length L is the maximum plate width, typically about 3 meter to 5 meter of a typical rolling machine, mostly about 3 meter. Within the limitations of the maximum plate width for the rolling machine of mostly about 3 meter and the ratio H/t of about 6, the allowable material losses can be minimized by balancing the variable ring height H, the steel strength and the cone angle α. This may result in a smaller angle α, about 1 deg to about 5 deg for example.

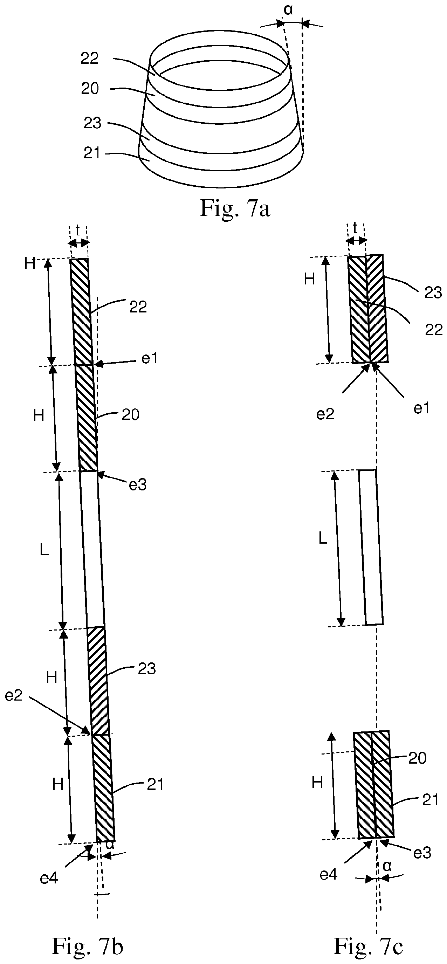

In figures 7a, 7b, 7c, a preferred arrangement is shown where two pairs of matching rings (20, 21 and 22, 23) of the in-line connection with multiple sets of engaging conical rings are cut from a single cone. An advantage of this arrangement is that four rings are produced simultaneously, which speeds up the manufacturing. Limitations for design optimization are similar to the arrangement shown in figure 5a and described previously. The outside bottom edge (e1) of ring (22) may match with the bottom inside edge (e2) of ring (23), and the outside bottom edge (e3) of ring (20) will match with the bottom inside edge (e4) of ring (21), such that the two sets of rings fit as shown in figure 7c to form an engaging connection.

The in-line connection with multiple sets of engaging conical rings can be applied at several locations of an offshore structure, such as an offshore structure having a turbine tower and a seabed fixation structure. In this embodiment an offshore structure having a seabed foundation structure 1, a transition piece 4 and a superstructure comprising a wind turbine tower 6, a nacelle 7 and blades 8. Alternatively, other superstructures may be provided, such as a platform, or a transformer station etc. Each location of the in-line connection at the offshore structure offers specific advantages, as described in the following.

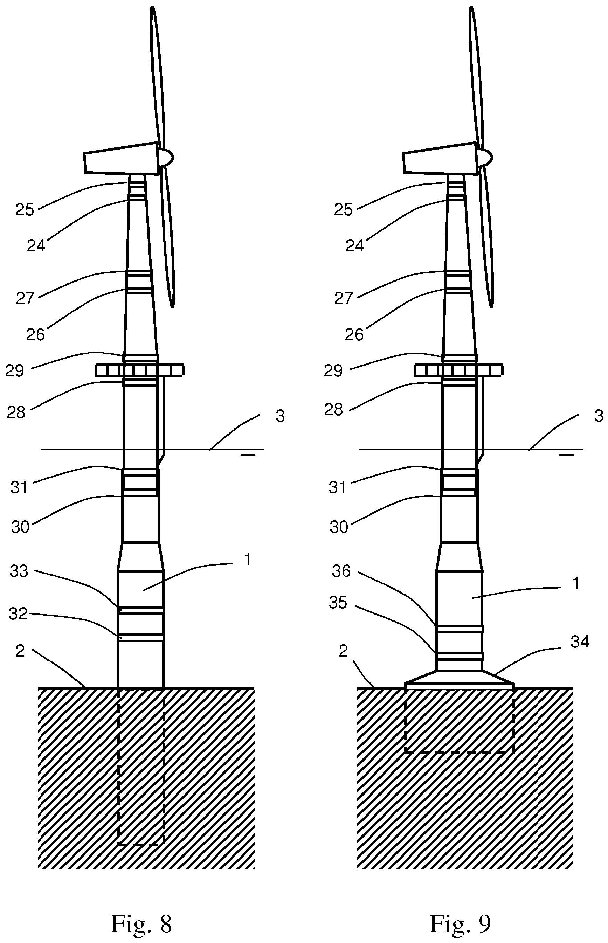

In figure 8 an offshore wind turbine on a monopile foundation, as seabed fixation structure, is shown. In this embodiment, a main structural steel of the offshore structure is constructed and installed in five pieces or sections or modules using five in-line connections with multiple sets of engaging conical rings. The in-line connection with multiple sets of engaging conical rings offers advantages specifically for each location, as described in the following.

The conical rings (24, 25) at the top represent the two rings of one in-line connection with multiple sets of engaging conical rings which is used to connect the nacelle 7 to the top section of the tower 6. An advantage of the in-line connection with multiple sets of engaging conical rings at this high location is that the installation of the complete nacelle can be done relatively fast in one single lift, without the requirement of people working at height. This provides for a relatively fast, safe and reliable installation.

The conical rings (26, 27) represent the two rings of one in-line connection with multiple sets of engaging conical rings which is used to divide the tower 6 in smaller sections in order to reduce the lift weight, transportation and installation costs. As such, even very heavy and large wind turbine towers can be safely and cost effectively being installed using readily available equipment, as, advantageously, the sections are sized to be installed by available installation vessels.

The rings (28, 29) represent the two conical rings of one in-line connection with multiple sets of engaging conical rings which replaces the bolted flange connection which is used in prior art. At this location the in-line connection with multiple sets of engaging conical rings eliminates the disadvantages of bolted flanges as described previously: installation is time consuming, fabrication costs are high, regular costly inspections are required, and the design of very large bolted flange connections is difficult. Furthermore, as this connection is relatively close to the sea level, corrosion can be a problem for the prior art bolted flange connections. Advantageously, the said in-line connection with the multiple sets of engaging conical rings is almost corrosion-proof.

The rings (30, 31) represent the two conical rings of one in-line connection with multiple sets of engaging conical rings which location is several meters under the splash zone. An advantage of the in-line connection with multiple sets of engaging conical rings at this location is that secondary steel structures, like the boat landing, ladders and working platform, can be pre-installed on the module that is on top. Also, an advantage of the in-line connection with multiple sets of engaging conical rings at this location is that it is very suitable for corrosion protection means like anodes or an impressed current system, which can be pre-installed as well.

The rings (32, 33) represent the two conical rings of one in-line connection with multiple sets of engaging conical rings at a rather deep under water location which connects the turbine tower to the foundation pile. More specifically, the seabed fixation structure 1 here comprises two sections, one section that is fixed to the seabed, a monopile foundation, and one section that is mounted on the monopile, or is in fact a second section of the monopile foundation, that is being connected to the seabed fixation part by means of the in-line connection with the conical rings 32, 33. The advantage of the in-line connection with multiple sets of engaging conical rings at this location is that the pile length and weight is reduced to the minimum, which is in favour of the required crane capacity. The piles according to prior art extend above the water surface (3) and are installed by pile driving hammers, which means that secondary steel and cathodic protection systems cannot be pre-installed, as seen in figure 1. Having the in-line connection with multiple sets of engaging conical rings at this location it also becomes very suitable for the pre-installation of corrosion protection means, like anodes or an impressed current system.

In figure 9 a suction bucket (34) is used instead of a pile as a seabed fixation part. The substructure part, or the monopile, is positioned on the seabed fixation part by means of an underwater in-line connection with the conical rings 35, 36. The rings (35,36) represent an in-line connection with multiple sets of engaging conical rings which pre-installation of the suction bucket (34) before the monopile (1) is placed on top. Suction buckets (34) are very heavy steel parts and the installation is time consuming and sensitive to weather. The application of a in-line connection with multiple sets of engaging conical rings therefore offers advantages in lifting weight and also provides more flexibility in the installation schedule, as the suction buckets (34) can be installed in advance. Further, the offshore structure of figure 9 is similar to the offshore structure of figure 8.

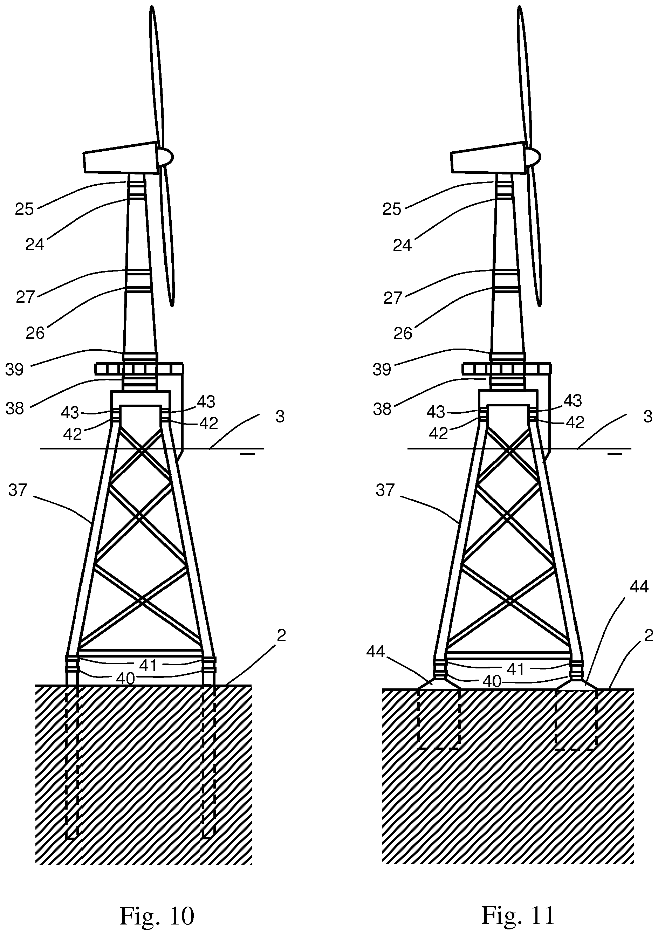

In figure 10 an offshore wind turbine on a jacket foundation (37), as seabed fixation structure, is shown. The wind turbine superstructure is connected to the jacket (37) by an in-line connection with multiple sets of engaging conical rings represented by the conical rings (38,39). The seabed fixation structure, the jacket (37), comprises a seabed fixation part of foundation piles and a substructure part of a jacket. The piles are driven in the seabed, usually by hammering. Once the piles are fixed to the seabed, the substructure part, here the jacket, can be connected to the foundation piles by an in-line connection with multiple sets of engaging conical rings represented by the rings (40,41) for each pile. On the jacket structure, a transition piece is mounted that is connected to the substructure part by the in-line connection with the conical rings (42, 43). The transition piece here can also be provided with pre-installed secondary steel such as a boat landing and/or a ladder and/or other elements. On the transition piece the superstructure, here a wind turbine in multiple sections or modules is positioned. In-line connection with conical rings (38, 39) provide for the connection to the transition piece. In-line connection with conical rings (26,27) provide for the connection between subsequent sections of the wind turbine tower, and, here too, the nacelle is positioned at once on the top of the turbine tower and is connected by means of in-line connection with conical rings 24, 25.

Figure 11 shows an offshore wind turbine on a jacket foundation (37), whereby suction buckets (44) are attached at the end of the legs for the bottom foundation. The suction buckets here replace the piles of the embodiment of figure 10. Similar to the suction buckets (34) used for monopiles the application of a in-line connection with multiple sets of engaging conical rings offers the advantage of reduced lifting weight and it also provides more flexibility in the installation schedule, as the suction buckets (44) can be installed in advance. The offshore structure of figure 11 is further similar to the offshore structure of figure 10.

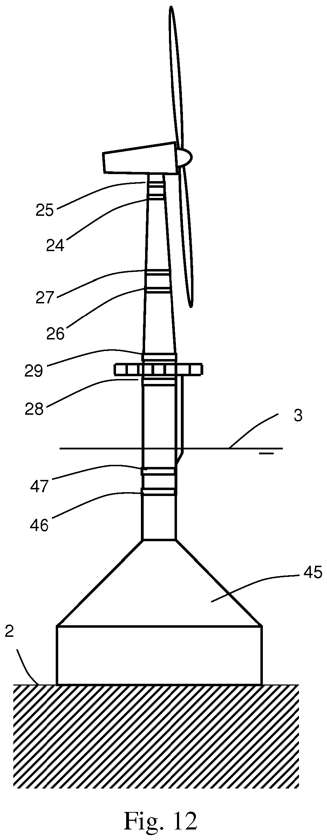

In figure 12 an offshore wind turbine and a gravity base foundation (45) are connected by a in-line connection with multiple sets of engaging conical rings represented by the rings (46,47). Gravity base foundations are often self-floating and installed by towing them to location, where they are installed by sinking to the sea bottom and stabilized by filling them with ballast. In cases where the towing route has a limitation of water depth or height, such as a bridge, the tower of the turbine is to be installed after the gravity base structure passed the obstacle. In other cases the stability of the floating gravity base can be such that also the tower has to be installed after the gravity base is installed. A special advantage of the in-line connection with multiple sets of engaging conical rings in this arrangement is that the connection can be made fast.

In the figures 8 to 12 the superstructure, comprising the tower (6), nacelle (7) and rotor (8) of an offshore wind turbine can also be an electrical power transformer topside, a meteorological mast, or a topside with process equipment for the production of oil or gas.

In the above examples, the invention has been explained using the embodiment of an in-line connection with two sets of engaging conical rings. It is to be understood that more sets, e.g. three, of engaging conical rings may also be provided to form an in-line connection. Also, it is to be understood that an in-line connection using a single set of engaging conical rings may also be possible. Furthermore, in the above embodiments, multiple in-line connections are shown. It is to be understood that an offshore structure may have one or more of such in-line connections of which at least one is, at least partly, under water.

For the purpose of clarity and a concise description, features are described herein as part of the same or separate embodiments, however, it will be appreciated that the scope of the invention may include embodiments having combinations of all or some of the features described, as long as the result of these combinations remains within the scope of the invention as defined by the subject-matter of the appended claims. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The mere fact that certain features are recited does not indicate that a combination of these features cannot be used to an advantage. Many variants will be apparent to the person skilled in the art and are understood to be comprised within the scope of the invention as defined by the following claims.

## Claims

1. Method for installing an offshore structure at an offshore site having a sea bottom (2) and a water depth defining a sea level (3); the offshore structure including a seabed fixation structure, a transition piece (4) and a superstructure; the method comprising
- installing the seabed fixation structure to the sea bottom, such that the seabed fixation structure at least partly extends above the sea bottom;
- positioning the transition piece (4) on the seabed fixation structure, wherein at least an upper side of the transition piece is above the sea level;
- positioning the superstructure on the transition piece (4) such that the superstructure is extending above the sea level;
wherein at least one of the connection between the transition piece and the seabed fixation structure and of the connection between the transition piece and the superstructure is provided as an in-line connection comprising at least two sets of conical rings (38, 39; 40, 41) engaging each other; **characterized in that** the at least one in-line connection is at least partly below the sea level (3).

2. Method according to claim 1, wherein the seabed fixation structure comprises a seabed fixation part and a substructure part, wherein the substructure part is positioned on the seabed fixation part below the sea level and the connection between the seabed fixation part and the substructure part is the in-line connection comprising at least two sets of conical rings (38, 39, 40, 41).

3. Method according to claim 1 or 2, wherein the seabed fixation structure and/or the substructure part thereof and/or the superstructure comprise multiple sections that are each connected by means of an in-line connection comprising multiple sets of conical rings (38, 39, 40, 41).

4. Method according to any of the preceding claims, wherein the structures to be installed are sized to fit on an installation vessel.

5. Method according to any of the preceding claims, wherein the positioning of a subsequent structure on a below structure is done consecutively.

6. Method according to any of the preceding claims, wherein the seabed fixation structure is, at an upper end thereof, or the transition piece (4) is pre-manufactured with a secondary steel structure such as a boat landing, climbing elements or a cathodic protect system.

7. Method according to any of the preceding claims, wherein the seabed fixation structure is a monopile structure or a jacket structure (37).

8. Method according to any of the preceding claims 2 - 7, wherein the seabed fixation structure or the seabed fixation part can be one of a pile, a suction can (44) or a gravity base (45), or a frame comprising one or more of the aforementioned elements.

9. Method according to any of the preceding claims, wherein the superstructure is a wind turbine tower.

10. Method according to any of the preceding claims, wherein the structures to be installed are pre-manufactured at a different location than the offshore site.

11. Method according to any of the preceding claims, wherein all connections, under water and above water, between the structures to be installed for obtaining the offshore structure are an in-line connection with multiple sets of conical rings (38, 39, 40, 41) engaging each other.

12. Method according to any of the preceding claims, wherein an upper end of a lower structure is provided with multiple conical rings (40, 41) at a distance from each other, and a lower end of an above engaging structure is provided with corresponding conical rings (38, 39), that upon positioning the above engaging structure on the lower structure, the corresponding conical rings (38, 39, 40, 41) engage with each other to provide a firm connection in the absence of additional equipment.

13. Offshore structure at an offshore site having a sea bottom (2) and a water height there above defining a sea level (3); the offshore structure including a seabed fixation structure, a transition piece (4) and a superstructure; wherein the seabed fixation structure is installed to the sea bottom, such that the seabed fixation structure at least partly extends above the sea bottom;
the transition piece (4) is positioned on the seabed fixation structure, wherein at least an upper side of the transition piece (4) is above the sea level; wherein the superstructure is positioned on the transition piece (4) such that the superstructure is extending above the sea level;
wherein the connection between the transition piece (4) and the seabed fixation structure and the connection between the transition piece (4) and the superstructure is provided as an in-line connection comprising at least two sets of conical rings (38, 39, 40, 41) engaging each other; **characterized in that** at least one of the in-line connections is at least partly below the sea level (3).

## Patentansprüche

1. Verfahren zum Installieren einer Offshore-Struktur an einem Offshore-Standort mit einem Meeresboden (2) und einer Wassertiefe, die einen Meeresspiegel (3) definiert; wobei die Offshore-Struktur eine Meeresgrund-Befestigungsstruktur, ein Übergangsstück (4) und eine Aufbaustruktur umfasst; wobei das Verfahren umfasst
- Installieren der Meeresgrund-Befestigungsstruktur am Meeresboden, so dass sich die Meeresgrund-Befestigungsstruktur wenigstens teilweise über dem Meeresboden erstreckt;
- Positionieren des Übergangsstücks (4) auf der Meeresgrund-Befestigungsstruktur, wobei wenigstens eine Oberseite des Übergangsstücks über dem Meeresspiegel liegt;
- Positionieren der Aufbaustruktur auf dem Übergangsstück (4), so dass sich die Aufbaustruktur über dem Meeresspiegel erstreckt;
wobei wenigstens eine der Verbindungen zwischen dem Übergangsstück und der Meeresgrund-Befestigungsstruktur und der Verbindung zwischen dem Übergangsstück und der Aufbaustruktur als eine In-Line-Verbindung bereitgestellt ist, die wenigstens zwei Sätze von konischen Ringen (38, 39; 40, 41) umfasst, die ineinandergreifen;
**dadurch gekennzeichnet, dass** die wenigstens eine In-Line-Verbindung wenigstens teilweise unterhalb des Meeresspiegels (3) liegt.

2. Verfahren nach Anspruch 1, wobei die Meeresgrund-Befestigungsstruktur einen Meeresgrund-Befestigungsteil und einen Unterstrukturteil umfasst, wobei der Unterstrukturteil auf dem Meeresgrund-Befestigungsteil unterhalb des Meeresspiegels positioniert ist und die Verbindung zwischen dem Meeresgrund-Befestigungsteil und dem Unterstrukturteil die In-Line-Verbindung ist, die wenigstens zwei Sätze von konischen Ringen (38, 39, 40, 41) umfasst.

3. Verfahren nach Anspruch 1 oder 2, wobei die Meeresgrund-Befestigungsstruktur und/oder der Unterstrukturteil und/oder die Aufbaustruktur aus mehreren Abschnitten besteht, die jeweils durch eine In-Line-Verbindung verbunden sind, die mehrere Sätze konischer Ringe (38, 39, 40, 41) umfasst.

4. Verfahren nach einem der vorhergehenden Ansprüche, wobei die zu installierenden Strukturen so bemessen sind, dass sie auf ein Installationsschiff passen.

5. Verfahren nach einem der vorhergehenden Ansprüche, wobei die Positionierung einer nachfolgenden Struktur auf einer darunter liegenden Struktur nacheinander erfolgt.

6. Verfahren nach einem der vorhergehenden Ansprüche, wobei die Meeresgrund-Befestigungsstruktur an ihrem oberen Ende oder das Übergangsstück (4) mit einer sekundären Stahlstruktur wie einem Bootssteg, Kletterelementen oder einem kathodischen Schutzsystem vorgefertigt wird.

7. Verfahren nach einem der vorhergehenden Ansprüche, wobei die Meeresgrund-Befestigungsstruktur eine Monopile-Struktur oder eine Jacket-Struktur (37) ist.

8. Verfahren nach einem der vorhergehenden Ansprüche 2 bis 7, wobei die Meeresgrund-Befestigungsstruktur oder das Meeresgrund-Befestigungsteil ein Pfahl, ein Sauggefäß (44) oder eine Schwerkraftbasis (45) oder ein Rahmen, der eines oder mehrere der vorgenannten Elemente umfasst, sein kann.

9. Verfahren nach einem der vorhergehenden Ansprüche, wobei die Aufbaustruktur ein Windkraftturm ist.

10. Verfahren nach einem der vorhergehenden Ansprüche, wobei die zu installierenden Strukturen an einem anderen Ort als dem Offshore-Standort vorgefertigt werden.

11. Verfahren nach einem der vorhergehenden Ansprüche, wobei alle Verbindungen unter und über Wasser zwischen den zu installierenden Strukturen zur Herstellung der Offshore-Struktur eine In-Line-Verbindung mit mehreren Sätzen von konischen Ringen (38, 39, 40, 41) sind, die ineinandergreifen.

12. Verfahren nach einem der vorhergehenden Ansprüche, wobei ein oberes Ende einer unteren Struktur mit mehreren konischen Ringen (40, 41) in einem Abstand voneinander versehen ist, und ein unteres Ende einer oberen Eingriffsstruktur mit entsprechenden konischen Ringen (38, 39) versehen ist, so dass beim Positionieren der oberen Eingriffsstruktur auf der unteren Struktur die entsprechenden konischen Ringe (38, 39, 40, 41) ineinander eingreifen, um eine feste Verbindung in Abwesenheit von zusätzlicher Ausrüstung bereitzustellen.

13. Offshore-Struktur an einem Offshore-Standort mit einem Meeresboden (2) und einer Wasserhöhe darüber, die einen Meeresspiegel (3) definiert; wobei die Offshore-Struktur eine Meeresgrund-Befestigungsstruktur, ein Übergangsstück (4) und eine Aufbaustruktur einschließt; wobei die Meeresgrund-Befestigungsstruktur auf dem Meeresboden installiert ist, so dass sich die Meeresgrund-Befestigungsstruktur wenigstens teilweise über dem Meeresboden erstreckt;
das Übergangsstück (4) auf der Meeresgrund-Befestigungsstruktur positioniert ist, wobei wenigstens eine Oberseite des Übergangsstücks (4) über dem Meeresspiegel liegt;
wobei der Aufbau auf dem Übergangsstück (4) so positioniert ist, dass sich die Aufbaustruktur über dem Meeresspiegel erstreckt;
wobei die Verbindung zwischen dem Übergangsstück (4) und der Meeresgrund-Befestigungsstruktur und die Verbindung zwischen dem Übergangsstück (4) und der Aufbaustruktur als In-Line-Verbindung bereitgestellt ist, die wenigstens zwei Sätze von konischen Ringen (38, 39, 40, 41) umfasst, die ineinandergreifen;
**dadurch gekennzeichnet, dass** wenigstens eine der Verbindungen wenigstens teilweise unterhalb des Meeresspiegels liegt (3).

## Revendications

1. Procédé pour installer une structure en mer au niveau d'un site en mer présentant un fond marin (2) et une profondeur d'eau définissant un niveau de la mer (3) ; la structure en mer comportant une structure de fixation au lit marin, une pièce de transition (4) et une superstructure ; le procédé comprenant
- l'installation de la structure de fixation au lit marin au fond marin, de telle sorte que la structure de fixation au lit marin s'étend au moins en partie au-dessus du fond marin ;
- le positionnement de la pièce de transition (4) sur la structure de fixation au lit marin, dans lequel au moins un côté supérieur de la pièce de transition est au-dessus du niveau de la mer ;
- le positionnement de la superstructure sur la pièce de transition (4) de telle sorte que la superstructure s'étend au-dessus du niveau de la mer ;
dans lequel au moins une de la liaison entre la pièce de transition et la structure de fixation au lit marin et de la liaison entre la pièce de transition et la superstructure est prévue en tant que liaison en ligne comprenant au moins deux ensembles de bagues coniques (38, 39 ; 40, 41) en contact l'un avec l'autre ;
**caractérisé en ce que** l'au moins une liaison en ligne est au moins en partie au-dessous du niveau de la mer (3).

2. Procédé selon la revendication 1, dans lequel la structure de fixation au lit marin comprend une partie de fixation au lit marin et une partie de sous-structure, dans lequel la partie de sous-structure est positionnée sur la partie de fixation au lit marin sous le niveau de la mer et la liaison entre la partie de fixation au lit marin et la partie de sous-structure est la liaison en ligne comprenant au moins deux ensembles de bagues coniques (38, 39, 40, 41).

3. Procédé selon la revendication 1 ou 2, dans lequel la structure de fixation au lit marin et/ou la partie de sous-structure de celle-ci et/ou la superstructure comprennent de multiples sections qui sont reliées chacune au moyen d'une liaison en ligne comprenant de multiples ensembles de bagues coniques (38, 39, 40, 41).

4. Procédé selon l'une quelconque des revendications précédentes, dans lequel les structures à installer sont dimensionnées pour s'adapter sur un navire d'installation.

5. Procédé selon l'une quelconque des revendications précédentes, dans lequel le positionnement d'une structure subséquente sur une structure située dessous est réalisé de manière consécutive.

6. Procédé selon l'une quelconque des revendications précédentes, dans lequel la structure de fixation au lit marin est, au niveau d'une extrémité supérieure de celle-ci, ou la pièce de transition (4) est préfabriquée avec une structure d'acier secondaire telle que des éléments de mise à l'eau, de montée à bord du bateau ou un système de protection cathodique.

7. Procédé selon l'une quelconque des revendications précédentes, dans lequel la structure de fixation au lit marin est une structure de monopieu ou une structure de chemise (37).

8. Procédé selon l'une quelconque des revendications 2-7, dans lequel la structure de fixation au lit marin ou la partie de fixation au lit marin peut être une d'un pieu, d'un bidon d'aspiration (44) ou d'une embase-poids (45), ou un cadre comprenant un ou plusieurs des éléments précédemment mentionnés.

9. Procédé selon l'une quelconque des revendications précédentes, dans lequel la superstructure est une tour d'éolienne.

10. Procédé selon l'une quelconque des revendications précédentes, dans lequel les structures à installer sont préfabriquées à un emplacement différent du site en mer.

11. Procédé selon l'une quelconque des revendications précédentes, dans lequel toutes les liaisons, sous l'eau et sur l'eau, entre les structures à installer pour obtenir la structure en mer sont une liaison en ligne avec de multiples ensembles de bagues coniques (38, 39, 40, 41) en contact les uns avec les autres.

12. Procédé selon l'une quelconque des revendications précédentes, dans lequel une extrémité supérieure d'une structure inférieure est pourvue de multiples bagues coniques (40, 41) à distance les unes des autres, et une extrémité inférieure d'une structure de contact ci-dessus est pourvue de bagues coniques (38, 39) correspondantes, qui lors du positionnement de la structure de contact ci-dessus sur la structure inférieure, les bagues coniques (38, 39, 40, 41) correspondantes sont en contact les unes avec les autres pour fournir une liaison solide en l'absence d'équipement additionnel.

13. Structure en mer au niveau d'un site en mer présentant un fond marin (2) et une hauteur d'eau au-dessus de celui-ci définissant un niveau de la mer (3) ; la structure en mer comportant une structure de fixation au lit marin, une pièce de transition (4) et une superstructure ; dans laquelle la structure de fixation au lit marin est installée sur le fond marin, de telle sorte que la structure de fixation au lit marin s'étend au moins en partie au-dessus du fond marin ;
la pièce de transition (4) est positionnée sur la structure de fixation au lit marin, dans laquelle au moins un côté supérieur de la pièce de transition (4) est au-dessus du niveau de la mer ;
dans laquelle la superstructure est positionnée sur la pièce de transition (4) de telle sorte que la superstructure s'étend au-dessus du niveau de la mer ;
dans laquelle la liaison entre la pièce de transition (4) et la structure de fixation au lit marin et la liaison entre la pièce de transition (4) et la superstructure est prévue en tant que liaison en ligne comprenant au moins deux ensembles de bagues coniques (38, 39, 40, 41) en contact l'un avec l'autre ; **caractérisée en ce qu'**au moins une des liaisons en ligne est au moins en partie au-dessous du niveau de la mer (3).
